# EUROPÄISCHE PATENTSCHRIFT

(11) **EP 2 504 595 B1**
(45) Veröffentlichungstag und Bekanntmachung des Hinweises auf die Patenterteilung: **16.04.2014**
(21) Anmeldenummer: 11752099.9
(22) Anmeldetag: 08.07.2011
(51) Int. Cl.: F16D 7/08

(54) **GRUNDKÖRPER FÜR EINE SICHERHEITSKUPPLUNG**
MAIN BODY FOR A SAFETY COUPLING
CORPS DE BASE POUR UN ACCOUPLEMENT DE SÉCURITÉ

(30) Priorität: 12.07.2010 DE 102010026951
(43) Veröffentlichungstag der Anmeldung: 03.10.2012
(73) Patentinhaber: R+W Antriebselemente GmbH, 63911 Klingenberg (DE)
(72) Erfinder: RIMPEL, Andreas, 63933 Mönchberg (DE); WÖBER, Michael, 63939 Wörth (DE); WOLF, Tobias, 63906 Erlenbach am Main (DE)
(74) Vertreter: Säger, Manfred
(86) Internationale Anmeldenummer: PCT/EP2011/003404
(87) Internationale Veröffentlichungsnummer: WO 2012/007129

(56) Entgegenhaltungen:
- DE-A1-102005 027 291
- DE-A1-102008 050 670
- US-A1- 2007 034 472

## Beschreibung

Die Erfindung betrifft eine Sicherheitskupplung mit einem Grundkörper.

Solche Grundkörper für eine der kraftschlüssigen Verbindung zweier Wellen über eine Passfedernut, Klauen, über einen Metallbalg und/oder Klemmnabe(n) dienende Sicherheitskupplung sind in einer Vielzahl von Ausführungsformen bekannt. So ist das Prinzip, bei Überlast den Kraftschluss zwischen den beiden Wellen durch Freikommen der Rastkugeln aus den Einsenkungen des Anbauflansches entgegen der Kraft der als Tellerfeder ausgebildten Feder bekannt (DE 197 39 469 A1). Der Einsatz von Klauen, ggf. mit einem sogenannten Elastomerkranz an dem Grundkörper ist ebenfalls bekannt (DE 10 2006 050 995 A1).

Eine gattungsgemäße Sicherheitskupplung ist aus DE 10 2008 050 670 A1 bekannt.

Von Nachteil bei diesen bekannten Grundkörpern nebst den Zusatzteilen besteht darin, dass diese sämtlich aus Stahl gefertigt und damit naturgemäss schwer sind, was den Einsatz dieser bekannten Grundkörper nebst Zusatzteilen für Sicherheitskupplungen stark einschränkt.

Der Erfindung liegt die Aufgabe zugrunde, einen Grundkörper nebst Zusatzteilen bei gleicher Sicherheit der daraus erstellten Kupplung erheblich leichter auszugestalten.

Diese Aufage wird erfindungsgemäss durch den Gegenstand des Anspruchs 1 gelöst, also durch einen Grundkörper aus Metall für eine der direkten oder indirekten Verbindung zumindest einer Welle und eines Antriebsrades, z.B. Ketten- oder Zahnriemenrades über eine Passfedernut, Klauen, über einen Metallbalg und/oder Klemmnabe(n) dienenden Sicherheitskupplung, mit metallischen Zusatzteilen, nämlich mit einem über Lagerkugeln sich an dem Grundkörper abstützenden und gegenüber demselben drehbaren Anbauflansch, dessen eine Stirnseite kraftschlüssig mit der einen Welle verbindbar ist und dessen andere Stirnseite Einsenkungen aufweist, mit einem auf der Aussenseite des Grundkörpers über einen Sicherungsring die Lagerkugeln sichernden Lagerring, mit in den Einsenkungen angeordneten Rastkugeln, und mit einem an diesen angreifenden und diese in Richtung der Einsenkungen aufgrund der Kraft einer vorzugsweise als Tellerfeder ausgebildten Feder pressenden und damit einen Formschluss zu dem mit der anderen Welle verbindbaren Grundkörper bildenden Schaltring, deren Kraft durch eine (auf dem Mantel des Grundkörpers befindliches Aussengewinde auf diesem drehbare) Einstellmutter einstellbar ist, wobei zumindest der Lagerring aus einem Stahl als Metall und zumindest der Grundkörper und der Schaltring aus Aluminium als Metall bestehen und wobei der Anbauflansch zugleich als Lagerkäfig für die Lagerkugeln ausgebildet ist. Dadurch ergibt sich eine kompakte Bauweise.

Eine aus diesem Grundkörper nebst Zusatzteilen erfindungsgemäss hergestellte Sicherheitskupplung weist nicht nur eine deutlich reduziertes Gewicht auf, sie ist auch gut wärmeableitend sowie elektisch isolierend als auch beim Ein- sowie Auskuppeln deutlich leiser und das alles ohne Einfluss auf die Lebensdauerfestigkeit oder die Genauigkeit. In Summe ergibt sich damit eine leichtere, kompaktere und stärkere Sicherheitskupplung. Mit der Erfindung kann eine Gewichtsreduzierung von wenigstens 50% und bis zu 60% im Vergleich zur Standardbaureihe erreicht werden. So hat eine Sicherheitskupplung für eine Drehmomentbegrenzung von bis zu 160 Nm hat nur ein Eigengewicht von 370 Gramm und ein Massenträgheitsmoment von 0,8 * 10⁻³ kgm². Dieses Verhältnis von Drehmomentleistung zu Abmessungen und Gewicht ist derzeit beim Stand der Technik nicht erzielbar und daher einmalig.

Wenn ausserdem der Stahl hochbelastbar sowie gehärtet ist, können dünnere und damit leichtere Teile eingesetzt werden, ohne dass die Belastbarkeit der damit hergestelltten Sicherheitskupplung geringer wird. Im wesentlichen dasselbe gilt, wenn das Aluminium nicht gegossen, sondern geschmiedet ist, wodurch sich nicht nur eine komprimiertere Struktur, sondern zugleich ein demgegenüber grössere Zähigkeit bei zugleich geringem Gewicht ergibt.

Durch die Oberflächenbeschichtung des geschmiedeten Aluminium -mit der sogenannten HCGL-Beschichtung (Hart Coat Glatt)- wird nicht nur eine Glättung sowie Versteifung der Oberfläche, sondern sowohl eine dadurch bedingte höhere Verschleissfestigkeit an den durch die Lager- sowie die Rastkugeln belasteten Stellen, als auch ein Höchsmass an Korrosionsbeständigkeit (von über 2000 h in der Salzsprühkammer) erreicht.

Vorzugsweise bestehen der Anbauflansch, der Schaltring und/oder die Einstellmutter aus dem Aluminium, wobei zugleich die Rastkugeln, die Lagerkugeln und/oder der Sicherungsring aus Stahl bestehen. Es ist also wesentlich für die erfindungsgemässe Idee, dass zumindest der Grundkörper und die Zusatzteile aus dem Aluminium und zumindest der Lagerring sowie ggf. die Rastkugeln, die Lagerkugeln und/order der Sicherungsring aus Stahl für eine Sicherheitskupplung verwendet werden.

Daurch, dass der Anbauflansch über die Lagerkugeln von dem Grundkörper beabstandet rotationssymmetrisch zu diesem radial ganz aussen angeordnet ist, ergibt sich mit Vorteil eine sehr steife Ausbildung.

Weitere Merkmale der Erfindung sind in den Unteransprüchen gekennzeichnet.

Ein Ausführungsbeispiel der Erfindung wird nachfplgend unter Bezugnahme auf die Zeichnung näher erläutert. In dieser zeigt:
- Figur 1: den Grundkörper nebst Zusatzteilen, im schematischen Halbschnitt;
- Figur 2: eine Vorderansicht II-II nach Fig. 1 und
- Figur 3: eine Rückansicht III-III nach Fig. 1.

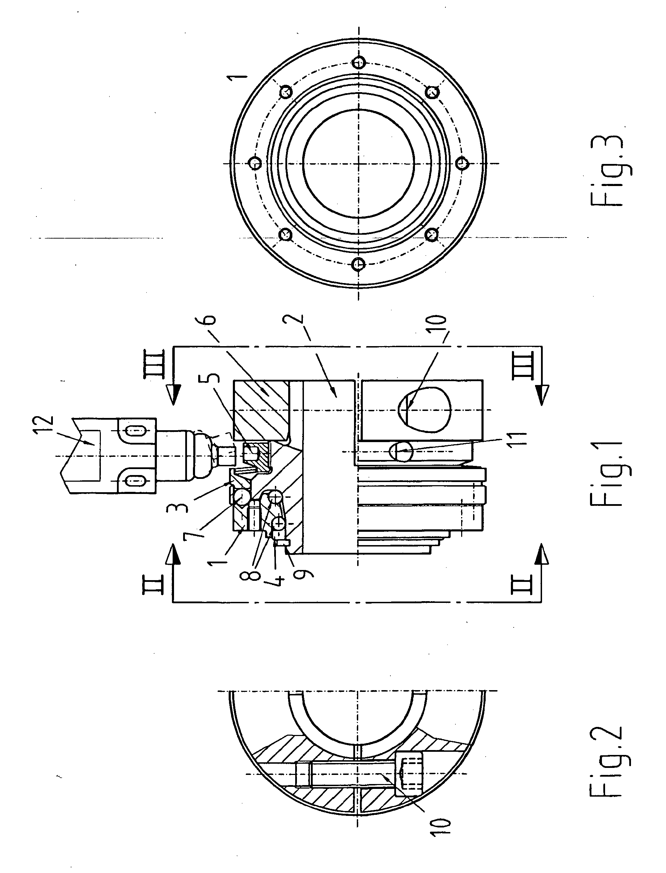

Der in Figur 1 gezeigte Grundkörper 2 besteht aus Metall und dient der direkten oder indirekten Verbindung von zumindest einer Welle und eines Antriebsrades, z.B. Ketten- oder Zahnriemenrades. So ist beim wiedergegebenen Ausführungsbeispiel auf der einen Stirnseite des Grundkörpers 2 eine Klemmnabe 6 für eine Sicherheitskupplung vorgesehen. '

Der Grundkörper 2 ist mit metallischen Zusatzteilen versehen, nämlich mit einem über Lagerkugeln 8 sich an dem Grundkörper 2 abstützenden und gegenüber demselben drehbaren Anbauflansch 1, dessen eine Stirnseite kraftschlüssig mit der Welle oder dem Antriebsrad verbindbar ist und dessen andere Stirnseite Einsenkungen aufweist. Er (2) ist ferner mit einem auf der Aussenseite des Grundkörpers über einen Sicherungsring 9 die Lagerkugeln 8 sichernden Lagerring 4, mit in den Einsenkungen angeordneten Rastkugeln 7 versehen.

Schliesslich weist der Grundkörper einen an den Rastkugeln 7 angreifenden und diese in Richtung der Einsenkungen aufgrund der Kraft einer vorzugsweise als Tellerfeder ausgebildten Feder pressenden und damit einen Formschluss zu dem mit der Welle bzw. dem Antriebsrad verbindbaren Grundkörper bildenden Schaltring 3 auf, deren Kraft durch eine Einstellmutter 5 einstellbar ist, wobei zumindest der Lagerring 4 und evtl. die Rastkugeln 7, die Lagerkugeln 8 und/oder der Sicherungsring 9 als Metall aus einem hochbelastbaren sowie gehärteten Stahl und zumindest der Grundkörper 2 und der Schaltring 3 sowie ggf. der Anbauflansch 1, der Schaltring 3 und/oder die Einstellmutter 5 aus geschmiedetem sowie ggf. oberflächenbeschichteten Aluminium bestehen.

Der Anbauflansch 1 ist zugleich als Lagerkäfig für die Lagerkugeln 8 ausgebildet und über die Lagerkugeln 8 von dem rotationssymmetrischen Grundkörper 2 beabstandet auch rotationssymmetrisch zu diesem radial aussen angeordnet ist.

## Patentansprüche

1. Sicherheitskupplung mit einem Grundkörper (2) aus Metall, die für eine der direkten oder indirekten Verbindung zumindest einer Welle und eines Antriebsrades, z.B. Ketten- oder Zahnriemenrades über eine Passfedernut, Klauen, über einen Metallbalg und/oder Klemmnabe(n) dient, mit metallischen Zusatzteilen, nämlich mit einem über Lagerkugeln (8) sich an dem Grundkörper (2) abstützenden und gegenüber demselben drehbaren Anbauflansch (1), dessen eine Stirnseite kraftschlüssig mit der Welle oder dem Antriebsrad verbindbar ist und dessen andere Stirnseite Einsenkungen aufweist, mit einem auf der Aussenseite des Grundkörpers über einen Sicherungsring (9) die Lagerkugeln (8) sichernden Lagerring (4), mit in den Einsenkungen angeordneten Rastkugeln (7), und mit einem an diesen angreifenden und diese in Richtung der Einsenkungen aufgrund der Kraft einer vorzugsweise als Tellerfeder ausgebildten Feder pressenden und damit einen Formschluss zu dem mit der anderen Welle verbindbaren Grundkörper bildenden Schaltring (3), deren Kraft durch eine Einstellmutter (5) einstellbar ist, **dadurch gekennzeichnet, dass** zumindest der Lagerring (4) als Metall aus einem Stahl und zumindest der Grundkörper (2) und der Schaltring (3) aus Aluminium bestehen und dass der Anbauflansch (1) zugleich als Lagerkäfig für die Lagerkugeln (8) ausgebildet ist.

2. Sicherheitskupplung nach Anspruch 1, **dadurch gekennzeichnet, dass** der Stahl hochbelastbar sowie gehärtet und/oder das Aluminium geschmiedet ausgebildet ist.

3. Sicherheitskupplung nach Anspruch 2, **dadurch gekennzeichnet, dass** das geschmiedete Aluminium oberflächenbeschichtet ausgebildet ist.

4. Sicherheitskupplung nach einem der vorhergehenden Ansprüche, **dadurch gekennzeichnet, dass** der Anbauflansch (1), der Schaltring (3) und/oder die Einstellmutter (5), aus dem Aluminium bestehen.

5. Sicherheitskupplung nach einem der vorhergehenden Ansprüche, **dadurch gekennzeichnet, dass** die Rastkugeln (7), die Lagerkugeln (8) und/oder der Sicherungsring (9) aus Stahl bestehen.

6. Sicherheitskupplung nach einem der vorhergehenden Ansprüche, **dadurch gekennzeichnet, dass** der Anbauflansch (1) über die Lagerkugeln (8) von dem Grundkörper (2) beabstandet rotationssymmetrisch zu diesem radial aussen angeordnet ist.

## Claims

1. A safety coupling with a main body (2) made of metal, which serves for one of the direct or indirect connection of at least one shaft and one drive wheel, for example, chain wheel or toothed-belt wheel, via an adjustment-spring groove, to claws, via a metal bellows and/or clamping hub(s), with metallic supplementary parts, namely, with a mounting flange (1) supported via ball-bearings (8) on the main body (2) and rotatable relative to the latter, of which the one end-face can be connected in a force fit manner to the shaft or the drive wheel and of which the other end-face provides indentations, with a bearing ring (4) securing the ball-bearings (8) on the outside of the main body via a securing ring (9), with locking balls (7) arranged in the indentations, and with a switching ring (3) engaging with the latter and pressing the latter in the direction towards the indentations because of the force of a spring, preferably embodied as a plate spring, and accordingly forming a form-fit connection with the main body capable of being connected to the other shaft, of which the force is adjustable through an adjustment nut (5),
**characterised in that**
at least the bearing ring (4) as a metal is made from a steel and at least the main body (2) and the switching ring (3) are made from aluminium, and that the mounting flange (1) is at the same time embodied as a bearing cage for the ball-bearings (8).

2. The safety coupling according to claim 1,
**characterised in that**
the steel is capable of withstanding high stress and hardened and/or the aluminium is forged.

3. The safety coupling according to claim 2,
**characterised in that**
the forged aluminium is provided with a surface coating.

4. The safety coupling according to any one of the preceding claims,
**characterised in that**
the mounting flange (1), the switching ring (3) and/or the adjustment nut (5) are made of aluminium.

5. The safety coupling according to any one of the preceding claims,
**characterised in that**
the locking balls (7), the ball-bearings (8) and/or the securing ring (9) are made of steel.

6. The safety coupling according to any one of the preceding claims,
**characterised in that**
the mounting flange (1) is arranged, distanced by means of the ball-bearings (8) from the main body (2), in a rotationally symmetrical manner, radially externally to the latter.

## Revendications

1. Accouplement de sécurité pourvu d'un corps de base (2) en métal, servant à la liaison directe ou indirecte d'au moins un arbre et d'un pignon menant, par exemple d'un pignon à chaîne ou d'un pignon à courroie dentée, par l'intermédiaire d'une rainure de clavette, de dents d'accouplement, d'un soufflet métallique et/ou d'un ou de plusieurs moyeux de serrage, ledit corps de base comportant des pièces métalliques supplémentaires, à savoir une bride de montage (1) s'appuyant sur le corps de base (2) par l'intermédiaire de billes de roulement (8) et pouvant tourner par rapport à ce dernier, bride dont un côté frontal peut être relié à force à l'arbre ou au pignon menant, et dont l'autre côté frontal comporte des creux, une bague de roulement (4) assujettissant les billes de roulement (8) sur le côté extérieur du corps de base au moyen d'un jonc d'arrêt (9), des billes d'encliquetage (7) disposées dans les creux, et une bague de commande (3) agissant sur ces billes et les pressant en direction des creux sous la force d'un ressort réalisé de préférence sous forme de rondelle Belleville, réalisant ainsi un engagement par complémentarité de forme avec le corps de base pouvant être relié à l'autre arbre, ladite force pouvant être réglée par un écrou de réglage (5), **caractérisé en ce qu'**au moins la bague de roulement (4) est réalisée en acier, et au moins le corps de base (2) et la bague de commande (3) en aluminium, et **en ce que** la bride de montage (1) est réalisée en outre sous la forme d'une cage de roulement pour les billes de roulement (8).

2. Accouplement de sécurité selon la revendication 1, **caractérisé en ce que** l'acier est très robuste et trempé et/ou l'aluminium est forgé.

3. Accouplement de sécurité selon la revendication 2, **caractérisé en ce que** l'aluminium forgé comporte un revêtement de surface.

4. Accouplement de sécurité selon l'une quelconque des revendications précédentes, **caractérisé en ce que** la bride de montage (1), la bague de commande (3) et/ou l'écrou de réglage (5) sont réalisés en aluminium.

5. Accouplement de sécurité selon l'une quelconque des revendications précédentes, **caractérisé en ce que** les billes d'encliquetage (7), les billes de roulement (8) et/ou le jonc d'arrêt (9) sont en acier.

6. Accouplement de sécurité selon l'une quelconque des revendications précédentes, **caractérisé en ce que** la bride de montage (1) est disposée radialement à l'extérieur au-dessus des billes de roulement (8) à une certaine distance du corps de base (2) et à symétrie de rotation par rapport à ce dernier.
